# EUROPEAN PATENT SPECIFICATION

(11) **EP 2 769 293 B1**
(45) Date of publication and mention of the grant of the patent: **02.12.2020**
(21) Application number: 12787755.3
(22) Date of filing: 15.10.2012
(51) Int. Cl.: G06F 3/0481, G06F 1/16

(54) **METHOD AND APPARATUS FOR CONTROL OF ORIENTATION OF INFORMATION PRESENTED BASED UPON DEVICE USE STATE**
VERFAHREN UND VORRICHTUNG ZUR STEUERUNG DER ORIENTIERUNG VON JE NACH GERÄTENUTZUNGSZUSTAND PRÄSENTIERTEN INFORMATIONEN
PROCÉDÉ ET APPAREIL DE COMMANDE DE L'ORIENTATION D'INFORMATIONS PRÉSENTÉES, SUR LA BASE D'UN ÉTAT D'UTILISATION DE DISPOSITIF

(30) Priority: 20.10.2011 US 201113277841
(43) Date of publication of application: 27.08.2014
(73) Proprietor: Nokia Technologies Oy, 02610 Espoo (FI)
(72) Inventor: BOSE, Raja, Mountain View, California 94040 (US); BRAKENSIEK, Jörg, Mountain View, California 94041 (US)
(74) Representative: Swindell & Pearson Limited
(86) International application number: PCT/FI2012/050982
(87) International publication number: WO 2013/057369

(56) References cited:
- EP-A1- 2 175 343
- US-A1- 2008 165 152
- US-A1- 2011 098 087

## Description

### TECHNOLOGICAL FIELD

Some example embodiments of the present invention relate generally to user interface technology and, more particularly, relate to a method and apparatus for providing a mechanism by which the orientation of information presented on a display may be maintained, regardless of the physical display orientation, based upon a use state of a device.

### BACKGROUND

The modern communications era has brought about a tremendous expansion of wireline and wireless networks. Computer networks, television networks, and telephony networks are experiencing an unprecedented technological expansion, fueled by consumer demand. Wireless and mobile networking technologies have addressed related consumer demands, while providing more flexibility and immediacy of information transfer.

Devices configured to present information to a user have become multi-functional terminals which are capable of a wide variety of functions including the presentation of multi-media (video, audio, etc.), accessing the Internet, executing various applications and programs, and facilitating voice phone calls, among numerous other functions. Typically, displays on such devices may be generally rectangular in shape which may facilitate viewing the display in a portrait or landscape orientation. Some information presented on a display may be better suited to a landscape orientation, while other information may be better suited to a portrait orientation. Further, a user may prefer to view a display in either portrait orientation or landscape orientation based on the information to be viewed or based on a convenient viewing orientation for the user. A user may transition between viewing orientations based upon the physical orientation of the device or by otherwise selecting a preferred orientation.

EP 2175343 A1 relates to a handheld electronic device in which some of the applications have a screen orientation of the GUI which varies in accordance with the orientation of the device; however one or more of the applications, such as the phone application, may have a fixed screen orientation which is unaffected by the device orientation.

US 2011/0098087 A1 relates to a car dock specific desktop which may be displayed in landscape mode regardless of an orientation of a mobile device, while a display of the desktop while the mobile desktop is not docked may appear in either landscape mode or portrait mode, depending on an orientation of the mobile device.

### BRIEF SUMMARY

The scope of protection sought for various embodiments of the invention is set out by the appended independent claims. The embodiments, examples and features, if any, described in this specification that do not fall under the scope of the independent claims are to be interpreted as examples useful for understanding various embodiments of the invention.

A method, apparatus and computer program product, as respectively set out in claims 1, 11 and 14, are provided to enable the provision of a mechanism by which an orientation of information presented may be maintained based upon a use state of a device, regardless of a physical display orientation. In some cases, for example, the orientation of information presented may be maintained in a first orientation (either landscape or portrait, for example) regardless of the physical display orientation.

Some embodiments of the invention may provide a method, apparatus and computer program product for improving user experience relating to devices which may otherwise change the orientation of information presented on a display based upon the physical display orientation, which may, in some instances, be disconcerting or otherwise undesirable. As a result, for example, mobile terminal users may enjoy an improved user interface experience with respect to viewing and controlling the orientation of information presented on a display of a mobile terminal regardless of the physical orientation of the mobile terminal.

An example embodiment, according to the present disclosure, may provide a method for determining a physical display orientation, determining whether the physical display orientation warrants a change of orientation of information presented, and determining whether a use state precludes a change of the orientation of the information presented based on the physical display orientation. The method may also including changing the orientation of the information presented in response to a physical display orientation that warrants a change of the orientation of the information presented in an instance in which the use state is determined not to preclude a change of the orientation of the information presented based on the physical display orientation. The method may still further include maintaining the orientation of the information presented in response to a physical display orientation that warrants a change of the orientation of the information presented in an instance in which the use state is determined to preclude the change of the orientation of the information presented based on the physical display orientation.

Further example embodiments of methods according to the present disclosure may include receiving an instruction to change the orientation of the information presented and changing the orientation of the information presented in response to the instruction regardless of whether the use state precludes a change of the orientation of the information presented based on the physical display orientation. Determining whether the physical display orientation warrants a change of the orientation of the information presented may include determining whether the physical display orientation and the orientation of the information presented are aligned.

Example embodiments of methods according to the present disclosure may also include determining a transition of the use state and changing the orientation of the information presented in response to a physical display orientation that warrants a change in the orientation of the information presented in an instance in which the use state is determined to have transitioned from a use state that precludes a change in the orientation of information presented based upon the physical display orientation to a use state that does not preclude a change in the orientation of information presented based on the physical display orientation. The physical display orientation may be determined by information received from an accelerometer. The use state may include a car-mode. The use state may be determined based upon the detection of a docking station. The use state may include a voice call.

Another example embodiment, according to the present disclosure, may provide an apparatus including at least one processor and at least one memory including computer program code, the at least one memory and the computer program code configured to, with the processor, cause the apparatus to at least determine a physical display orientation, determine whether the physical display orientation warrants a change of orientation of information presented, and determine whether a use state precludes a change of the orientation of the information presented based upon the physical display orientation. The apparatus may further be caused to change the orientation of the information presented in response to a physical display orientation that warrants a change of the orientation of the information presented in an instance in which the use state is determined not to preclude a change of the orientation of the information based on the physical display orientation. The apparatus may still further be caused to maintain the orientation of the information presented in response to a physical display orientation that warrants a change of the orientation of the information presented in an instance in which the use state is determined to preclude the change of the orientation of the information presented based upon the physical display orientation.

Example embodiments of an apparatus according to the present disclosure may further be caused to receive an instruction to change the orientation of the information presented and change the orientation of the information presented in response to the instruction, regardless of whether the use state precludes the change of the orientation of the information presented based upon the physical display orientation. Causing the apparatus to determine whether the physical display orientation warrants a change of the orientation of the information presented may include causing the apparatus to determine whether the physical display orientation and the orientation of the information presented are aligned.

Further example embodiments of an apparatus according to the present disclosure may further be caused to determine a transition of the use state and change the orientation of the information presented in response to a physical display orientation that warrants a change in the orientation of the information presented in an instance in which the use state is determined to have transitioned from a use state that precludes a change in the orientation of information presented based upon the physical display orientation to a use state that does not preclude a change in the orientation of the information presented based upon the physical display orientation. The physical display orientation may be determined based upon information received from an accelerometer. The use state may include a car-mode and the use state may be determined based upon the detection of a docking station. The use state may include a voice call.

Another example embodiment, according to the present disclosure, may provide a computer program product comprising at least one non-transitory computer-readable storage medium having computer-executable program code instructions stored therein, the computer-executable program code instructions comprising program code instructions to determine a physical display orientation, determine whether the physical display orientation warrants a change of the orientation of information presented, and determine whether a use state precludes a change of the orientation of the information presented based upon the physical display orientation. The computer program product may further include program code instructions to change the orientation of the information presented in response to a physical display orientation that warrants a change of the orientation of information presented in an instance in which the use state is determined not to preclude a change of the orientation of the information presented based on the physical display orientation. The computer program product may still further include program code instructions to maintain the orientation of the information presented in response to a physical display orientation that warrants a change of the orientation of the information presented in an instance in which the use state is determined to preclude the change of the orientation of the information presented based upon the physical display orientation.

Computer program products according to example embodiments of the present disclosure may further include program code instructions to receive an instruction to change the orientation of the information presented and change the orientation of the information presented in response to the instruction regardless of whether the use state precludes the change of the orientation of the information presented based upon the physical display orientation. The program code instructions to determine whether the physical display orientation warrants a change of the orientation of the information presented may include program code instructions to determine whether the physical display orientation and the orientation of the information presented are aligned.

Computer program products according to further example embodiments of the present disclosure may include program code instructions to determine a transition of the use state and change the orientation of the information presented in response to a physical display orientation that warrants a change in the orientation of the information presented in an instance in which the use state is determined to have transitioned from a use state that precludes a change in the orientation of information presented based upon the physical display orientation to a use state that does not preclude a change in the orientation of information presented based upon the physical display orientation. The physical display orientation may be determined based upon information received from an accelerometer. The use state may include a car-mode and the use state may be determined based upon detection of a docking station. The use state may include a voice call.

Another example embodiment, according to the present disclosure, may provide an apparatus including means to determine a physical display orientation, means to determine whether the physical display orientation warrants a change of orientation of information presented, and means to determine whether a use state precludes a change of the orientation of the information presented based upon the physical display orientation. The apparatus may further include means to change the orientation of the information presented in response to a physical display orientation that warrants a change of the orientation of the information presented in an instance in which the use state is determined not to preclude a change of the orientation of the information based on the physical display orientation. The apparatus may still further include means to maintain the orientation of the information presented in response to a physical display orientation that warrants a change of the orientation of the information presented in an instance in which the use state is determined to preclude the change of the orientation of the information presented based upon the physical display orientation.

Example embodiments of an apparatus according to the present disclosure may further include means to receive an instruction to change the orientation of the information presented and means to change the orientation of the information presented in response to the instruction, regardless of whether the use state precludes the change of the orientation of the information presented based upon the physical display orientation. The means to determine whether the physical display orientation warrants a change of the orientation of the information presented may include means to determine whether the physical display orientation and the orientation of the information presented are aligned.

Further example embodiments of an apparatus according to the present disclosure may further include means to determine a transition of the use state and change the orientation of the information presented in response to a physical display orientation that warrants a change in the orientation of the information presented in an instance in which the use state is determined to have transitioned from a use state that precludes a change in the orientation of information presented based upon the physical display orientation to a use state that does not preclude a change in the orientation of the information presented based upon the physical display orientation. The physical display orientation may be determined based upon information received from an accelerometer. The use state may include a car-mode and the use state may be determined based upon the detection of a docking station. The use state may include a voice call.

### BRIEF DESCRIPTION OF THE SEVERAL VIEWS OF THE DRAWING(S)

Having thus described some embodiments of the present disclosure in general terms, reference will now be made to the accompanying drawings, which are not necessarily drawn to scale, and wherein:
FIG. 1 is a schematic block diagram of a mobile terminal according to an example embodiment of the present disclosure;
FIG. 2 is a schematic block diagram of an apparatus for providing a mechanism by which orientation of information presented on a display may be based upon device use state according to an example embodiment of the present disclosure;
FIG. 3 is an illustration of a mobile terminal presenting information in a portrait orientation according to an example embodiment of the present disclosure;
FIG. 4 is an illustration of a mobile terminal presenting information in a landscape orientation according to an example embodiment of the present disclosure;
FIG. 5 is an illustration of a mobile terminal presenting information in a landscape orientation according to another example embodiment of the present disclosure; and
FIG. 6 is a block diagram of the operations performed to provide control of orientation of information presented based upon a device use state according to an example embodiment of the present disclosure.

### DETAILED DESCRIPTION

Some embodiments of the present disclosure will now be described more fully hereinafter with reference to the accompanying drawings, in which some, but not all embodiments of the present disclosure are shown. Indeed, various embodiments of the invention, the scope of which is defined by the appended claims, may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information" and similar terms may be used interchangeably to refer to data capable of being transmitted, received and/or stored in accordance with some embodiments of the present invention. Thus, use of any such terms should not be taken to limit the scope of the invention, which is defined by the appended claims.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

As defined herein a "computer-readable storage medium," which refers to a non-transitory, physical storage medium (e.g., volatile or non-volatile memory device), can be differentiated from a "computer-readable transmission medium," which refers to an electromagnetic signal.

Some embodiments of the present invention may relate to a provision of a mechanism by which the orientation of information presented on a display is maintained, despite the physical orientation of the display changing. In contrast, a device may be configured to align the orientation of information presented on a display with the physical orientation of the display, and to change the orientation of information presented on the display in response to a change of the physical orientation of the display. However, in some circumstances, changing the orientation of information presented on a display may be undesirable, regardless of a change of the physical orientation of the display. Therefore it may be desirable to maintain the orientation of information presented on a display, notwithstanding a change in the physical orientation of the display, when a device is engaged in certain use states or operational modes.

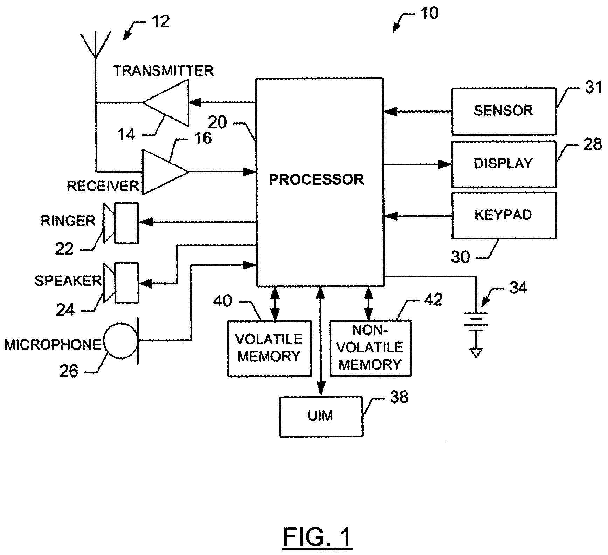

FIG. 1 illustrates a block diagram of a mobile terminal 10 that would benefit from an embodiment of the present invention. It should be understood, however, that the mobile terminal 10 as illustrated and hereinafter described is merely illustrative of one type of device that may benefit from embodiments of the present invention and, therefore, should not be taken to limit the scope of embodiments of the present invention. As such, although numerous types of mobile terminals, such as portable digital assistants (PDAs), mobile telephones, pagers, mobile televisions, gaming devices, laptop computers, cameras, tablet computers, touch surfaces, wearable devices, video recorders, audio/video players, radios, electronic books, positioning devices (e.g., global positioning system (GPS) devices), or any combination of the aforementioned, and other types of voice and text communications systems, may readily employ embodiments of the present invention, while other devices including fixed (non-mobile) electronic devices may also employ some example embodiments.

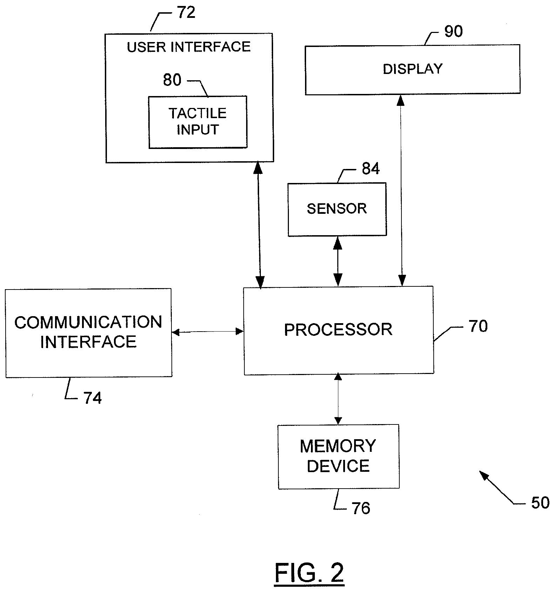

The mobile terminal 10 may include an antenna 12 (or multiple antennas) in operable communication with a transmitter 14 and a receiver 16. The mobile terminal 10 may further include an apparatus, such as a processor 20 or other processing device (e.g., processor 70 of FIG. 2), which controls the provision of signals to and the receipt of signals from the transmitter 14 and receiver 16, respectively. The signals may include signaling information in accordance with the air interface standard of the applicable cellular system, and also user speech, received data and/or user generated data. In this regard, the mobile terminal 10 is capable of operating with one or more air interface standards, communication protocols, modulation types, and access types. By way of illustration, the mobile terminal 10 is capable of operating in accordance with any of a number of first, second, third and/or fourth-generation communication protocols or the like. For example, the mobile terminal 10 may be capable of operating in accordance with second-generation (2G) wireless communication protocols IS-136 (time division multiple access (TDMA)), GSM (global system for mobile communication), and IS-95 (code division multiple access (CDMA)), or with third-generation (3G) wireless communication protocols, such as Universal Mobile Telecommunications System (UMTS), CDMA2000, wideband CDMA (WCDMA) and time division-synchronous CDMA (TD-SCDMA), with 3.9G wireless communication protocol such as evolved UMTS Terrestrial Radio Access Network (E-UTRAN), with fourth-generation (4G) wireless communication protocols (e.g., Long Term Evolution (LTE) or LTE-Advanced (LTE-A) or the like. As an alternative (or additionally), the mobile terminal 10 may be capable of operating in accordance with non-cellular communication mechanisms. For example, the mobile terminal 10 may be capable of communication in a wireless local area network (WLAN) or other communication networks.

In some embodiments, the processor 20 may include circuitry desirable for implementing audio and logic functions of the mobile terminal 10. For example, the processor 20 may be comprised of a digital signal processor device, a microprocessor device, and various analog to digital converters, digital to analog converters, and other support circuits. Control and signal processing functions of the mobile terminal 10 are allocated between these devices according to their respective capabilities. The processor 20 thus may also include the functionality to convolutionally encode and interleave message and data prior to modulation and transmission. The processor 20 may additionally include an internal voice coder, and may include an internal data modem. Further, the processor 20 may include functionality to operate one or more software programs, which may be stored in memory. For example, the processor 20 may be capable of operating a connectivity program, such as a conventional Web browser. The connectivity program may then allow the mobile terminal 10 to transmit and receive Web content, such as location-based content and/or other web page content, according to a Wireless Application Protocol (WAP), Hypertext Transfer Protocol (HTTP) and/or the like, for example.

The mobile terminal 10 may also comprise a user interface including an output device such as a conventional earphone or speaker 24, a ringer 22, a microphone 26, a display 28, and a user input interface, all of which are coupled to the processor 20. The user input interface, which allows the mobile terminal 10 to receive data, may include any of a number of devices allowing the mobile terminal 10 to receive data, such as a keypad 30, a touch display (display 28 providing an example of such a touch display) or other input device. In embodiments including the keypad 30, the keypad 30 may include the conventional numeric (0-9) and related keys (#, *), and other hard and soft keys used for operating the mobile terminal 10. Alternatively or additionally, the keypad 30 may include a conventional QWERTY keypad arrangement. The keypad 30 may also include various soft keys with associated functions. In addition, or alternatively, the mobile terminal 10 may include an interface device such as a joystick or other user input interface. Some embodiments employing a touch display may omit the keypad 30 and any or all of the speaker 24, ringer 22, and microphone 26 entirely.

Additional input to the processor 20 may be provided by a sensor 31. The sensor 31 may include one or more of a motion sensor, temperature sensor, light sensor, accelerometer, or the like. Forms of input that may be received by the sensor may include physical motion of the mobile terminal 10, whether or not the mobile terminal 10 is in a dark environment (e.g., a pocket) or in daylight, whether the mobile terminal is being held by a user or not (e.g., through temperature sensing of a hand) or the physical orientation of the mobile terminal 10 as will be further described below. The mobile terminal 10 further includes a battery 34, such as a vibrating battery pack, for powering various circuits that are required to operate the mobile terminal 10, as well as optionally providing mechanical vibration as a detectable output.

The mobile terminal 10 may further include a user identity module (UIM) 38. The UIM 38 is typically a memory device having a processor built in. The UIM 38 may include, for example, a subscriber identity module (SIM), a universal integrated circuit card (UICC), a universal subscriber identity module (USIM), a removable user identity module (R-UIM), etc. The UIM 38 typically stores information elements related to a mobile subscriber. In addition to the UIM 38, the mobile terminal 10 may be equipped with memory. For example, the mobile terminal 10 may include volatile memory 40, such as volatile Random Access Memory (RAM) including a cache area for the temporary storage of data. The mobile terminal 10 may also include other non-volatile memory 42, which may be embedded and/or may be removable. The memories may store any of a number of pieces of information, and data, used by the mobile terminal 10 to implement the functions of the mobile terminal 10.

In some embodiments, the mobile terminal 10 may also include a camera or other media capturing element (not shown) in order to capture images or video of objects, people and places proximate to the user of the mobile terminal 10. However, the mobile terminal 10 (or even some other fixed terminal) may also practice example embodiments in connection with images or video content (among other types of content) that are produced or generated elsewhere, but are available for consumption at the mobile terminal 10 (or fixed terminal).

An example embodiment of the invention will now be described with reference to FIG. 2, in which certain elements of an apparatus 50 for providing a mechanism by which the orientation of information presented on a display may be maintained, notwithstanding a change of the physical display orientation of a display, based upon a use state of the apparatus. The apparatus 50 of FIG. 2 may be employed, for example, in conjunction with the mobile terminal 10 of FIG. 1. The user interface 72 of FIG. 2 may include one or more of the display 28 and keypad 30 of the mobile terminal of FIG. 1. The apparatus may further include one or more sensors 84 such as sensor 31 of FIG. 1. The processor 70 of FIG. 2 may be embodied in the processor 20 of FIG. 1 and the communications interface 72 may include the transmitter 14, receiver 16, and antenna 12 of the mobile terminal 10. However, it should be noted that the apparatus 50 of FIG. 2, may also be employed in connection with a variety of other devices, both mobile and fixed, and therefore, embodiments of the present invention should not be limited to application on devices such as the mobile terminal 10 of FIG. 1.

It should also be noted that while FIG. 2 illustrates one example of a configuration of an apparatus for providing a mechanism by which the orientation of information presented on a display may be maintained, regardless of the physical display orientation, based upon a use state of a device, numerous other configurations may also be used to implement embodiments of the present invention. As such, in some embodiments, although devices or elements are shown as being in communication with each other, hereinafter such devices or elements should be considered to be capable of being embodied within the same device or element and thus, devices or elements shown in communication should be understood to alternatively be portions of the same device or element.

Referring again to FIG. 2, the apparatus 50 for providing a mechanism by which the orientation of information presented on a display may be maintained, regardless of the physical display orientation, based upon a use state of a device is provided and may include or otherwise be in communication with a processor 70, a user interface 72, a communication interface 74 and a memory device 76. In some embodiments, the processor 70 (and/or co-processors or any other processing circuitry assisting or otherwise associated with the processor 70) may be in communication with the memory device 76 via a bus for passing information among components of the apparatus 50. The memory device 76 may include, for example, one or more volatile and/or non-volatile memories. In other words, for example, the memory device 76 may be an electronic storage device (e.g., a computer readable storage medium) comprising gates configured to store data (e.g., bits) that may be retrievable by a machine (e.g., a computing device like the processor 70). The memory device 76 may be configured to store information, data, applications, instructions or the like for enabling the apparatus to carry out various functions in accordance with an example embodiment of the present invention. For example, the memory device 76 could be configured to buffer input data for processing by the processor 70. Additionally or alternatively, the memory device 76 could be configured to store instructions for execution by the processor 70.

The apparatus 50 may, in some embodiments, be a mobile terminal (e.g., mobile terminal 10) or a computing device configured to employ an example embodiment of the present invention. However, in some embodiments, the apparatus 50 may be embodied as a chip or chip set. In other words, the apparatus 50 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus 50 may therefore, in some cases, be configured to implement an embodiment of the present invention on a single chip or as a single "system on a chip." As such, in some cases, a chip or chipset may constitute means for performing one or more operations for providing the functionalities described herein.

The processor 70 may be embodied in a number of different ways. For example, the processor 70 may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor 70 may include one or more processing cores configured to perform independently. A multi-core processor may enable multiprocessing within a single physical package. Additionally or alternatively, the processor 70 may include one or more processors configured in tandem via the bus to enable independent execution of instructions, pipelining and/or multithreading.

In an example embodiment, the processor 70 may be configured to execute instructions stored in the memory device 76 or otherwise accessible to the processor 70. Alternatively or additionally, the processor 70 may be configured to execute hard coded functionality. As such, whether configured by hardware or software methods, or by a combination thereof, the processor 70 may represent an entity (e.g., physically embodied in circuitry) capable of performing operations according to an embodiment of the present invention while configured accordingly. Thus, for example, when the processor 70 is embodied as an ASIC, FPGA or the like, the processor 70 may be specifically configured hardware for conducting the operations described herein. Alternatively, as another example, when the processor 70 is embodied as an executor of software instructions, the instructions may specifically configure the processor 70 to perform the algorithms and/or operations described herein when the instructions are executed. However, in some cases, the processor 70 may be a processor of a specific device (e.g., a mobile terminal) adapted for employing an embodiment of the present invention by further configuration of the processor 70 by instructions for performing the algorithms and/or operations described herein. The processor 70 may include, among other things, a clock, an arithmetic logic unit (ALU) and logic gates configured to support operation of the processor 70.

Meanwhile, the communication interface 74 may be any means such as a device or circuitry embodied in either hardware or a combination of hardware and software that is configured to receive and/or transmit data from/to a network and/or any other device or module in communication with the apparatus 50. In this regard, the communication interface 74 may include, for example, an antenna (or multiple antennas) and supporting hardware and/or software for enabling communications with a wireless communication network. In some environments, the communication interface 74 may alternatively or also support wired communication. As such, for example, the communication interface 74 may include a communication modem and/or other hardware/software for supporting communication via cable, digital subscriber line (DSL), universal serial bus (USB) or other mechanisms.

The user interface 72 may be in communication with the processor 70 to receive an indication of a user input at the user interface 72 and/or to provide an audible, visual, mechanical or other output to the user. As such, the user interface 72 may include, for example, a keyboard, a mouse, a joystick, a display, a touch screen(s), touch areas, device surfaces capable of detecting objects hovering over the surface, soft keys, a microphone, a speaker, motion sensor, temperature sensor, accelerometer, or other input/output mechanisms. In this regard, for example, the processor 70 may comprise user interface circuitry configured to control at least some functions of one or more elements of the user interface, such as, for example, a speaker, ringer, microphone, display, and/or the like. The processor 70 and/or user interface circuitry comprising the processor 70 may be configured to control one or more functions of one or more elements of the user interface through computer program instructions (e.g., software and/or firmware) stored on a memory accessible to the processor 70 (e.g., memory device 76, and/or the like).

In an example embodiment, the apparatus 50 may include or otherwise be in communication with a display 90. In different example cases, the display 90 may be a two dimensional (2D) or three dimensional (3D) display. Additionally or alternatively, the display 90 may include multiple display surfaces. The user interface 72 may be in communication with the display 90 to receive indications of user inputs and to modify a response to such inputs based on corresponding user actions that may be inferred or otherwise determined responsive to the indications. In one alternative, an input may be provided other than by direct interaction with a tactile input (e.g., tactile input 80), such as movement of the entire or part of the apparatus 50 which may be interpreted by a sensor 84, such as an accelerometer.

Example embodiments of a mobile terminal which may benefit from the present invention may include a display, such as display 90, which take various shapes. For example, a display may include a rectangular shape wherein one dimension (e.g., the length) is substantially larger than another dimension (e.g., the width). Such displays may be common as they reflect the shape, and often the aspect ratio, of high-definition televisions, which may approximate a 16:9 aspect ratio in which there are nine units of height for every sixteen units of width. Other display shapes may include circular displays, oval displays, square displays, rectangular displays with rounded corners, or virtually any two dimensional shape.

For purposes of this disclosure, the term "up" shall be defined as a direction away from the surface of the earth, extending generally along a line extending from the center of the earth. The term "vertical" shall mean a direction extending substantially along this line while "horizontal" shall refer to a direction substantially orthogonal to the vertical direction.

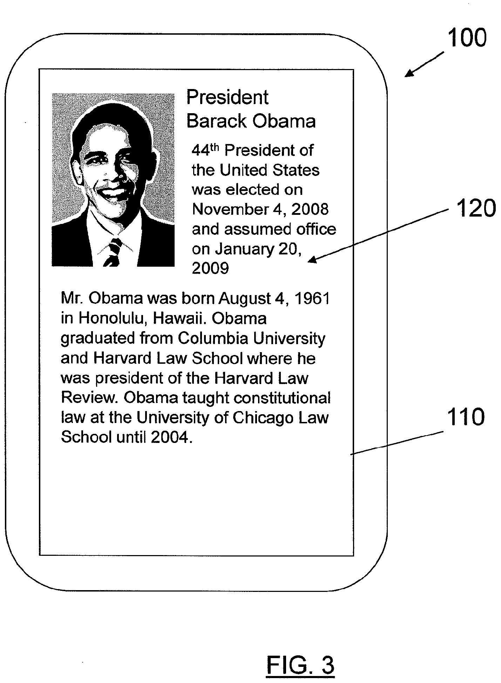

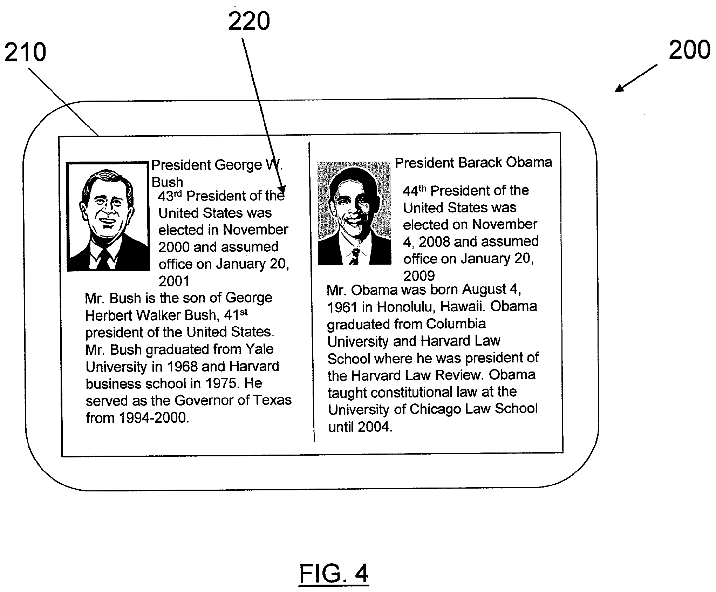

Information configured for presentation on a display may be presented in an orientation that is determined based upon the physical orientation of the display. For example, as illustrated in FIG. 3, if a mobile terminal 100 comprising a rectangular display 110 is being held by a user with a narrow dimension of the display 110 being held substantially up, the information 120 may be presented in an orientation in which the top of the information is at the upper most part of the display 110. A rectangular or substantially rectangular display as illustrated in FIG. 3 may include two primary physical display orientations. A first physical display orientation may be such that a narrow dimension of the display 110 is directed up. Conventional terminology for such an orientation of a rectangular display is a "portrait" orientation. A second physical display orientation may be such that a wide dimension of the display is directed up. Conventional terminology for such an orientation of a rectangular display is a "landscape" orientation. FIG. 4 illustrates an example embodiment of a mobile terminal 200 with a display 210 arranged in a landscape orientation (e.g., the long dimension of the rectangular display is directed up).

The physical orientation of the display may be determined in a number of ways. A sensor, such as sensor 31 of mobile terminal 10, may be used to detect the direction of gravitational force relative to the orientation of the mobile terminal in order to determine which, if any, edge of a display is directed upwardly. The direction of the force of gravity may be determined, for example, by an accelerometer (multi-axis, single-axis, or a combination thereof). The upwardly directed edge of the display, or the edge of the display which is determined to be more upwardly directed than any other edge, may be determined or assumed to be the top of the display. Other sensors by which the physical orientation of the display may be determined may be a magnetic sensor, such as sensor 31 of mobile terminal 10, that is configured to detect a magnetic field. The magnetic field may be that of the magnetic field of the earth, or through a locally generated magnetic field to which a mobile terminal 10 and sensor 31 may be calibrated for orientation recognition. Still other sensors by which a physical orientation of a display may be determined may be a gyroscopic sensor which may determine the upward edge of a display based upon movements seen at the sensor. The physical orientation of a display may also be determined through communications with near-field objects. For example, a mobile terminal 10 may be in communication (via radio frequency, Bluetooth®, etc.) with fixed-location objects in relatively close proximity to the mobile terminal 10 where the objects serve as beacons with which the mobile terminal 10 may determine its location and orientation based upon the known locations of the beacons. The beacons of the fixed-location objects may, for example, be RFID transponders.

While FIGS. 3 and 4 have been described with respect to a physical orientation of a display, the information presented on a display may also include an orientation. For example, using the example embodiments of FIGS. 3 and 4, the information presented on a display may be presented in a portrait orientation as shown in FIG. 3 in which the top of the information is presented along a short edge of the rectangular display. Conversely, as shown in FIG. 4, the information may be presented in a landscape orientation, in which the top of the information is presented along a long edge of the display. The "top" of the information may be the top of a web page, the top of a picture, the top of a video image, or the upper edge of any information configured for presentation. In some embodiments, for example, a map application, the "top" of a displayed map may be the compass direction of "North."

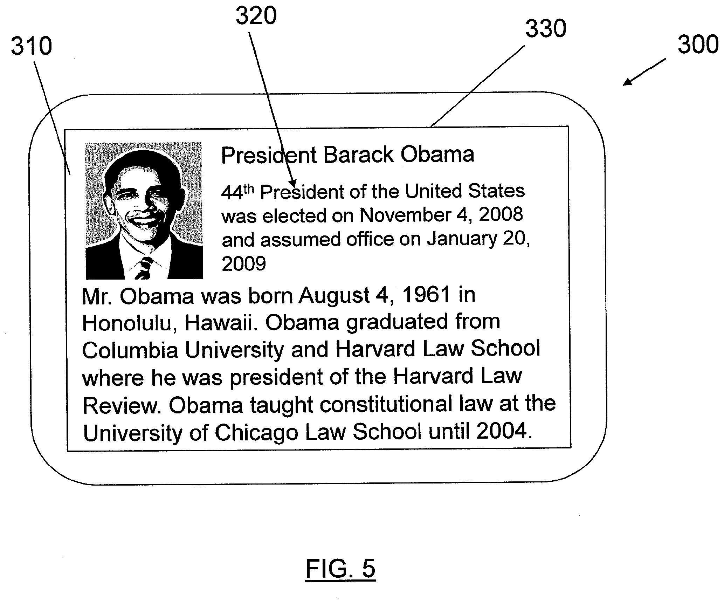

Some information may be configured for display in a particular orientation or the information may be of a format that is more conducive to presentation in a particular orientation. For example, a high-definition video may be more conducive to presentation in a landscape mode as the landscape mode will better approximate the 16:9 aspect ratio of the video and a larger portion of the display may be used without distortion of the video image. Other information, such as text as in an electronic copy of a book or text of a web page, may be of a format that is adjustable to accommodate whichever orientation may be preferred by a user. For example, a user may view a single page of an electronic book in a portrait orientation as illustrated in FIG. 3. However, should the user wish to view opposing pages of a book simultaneously, two pages of the electronic book may be displayed concurrently in a landscape orientation as shown in FIG. 4. Optionally, the information displayed in a portrait orientation may be reformatted when displayed in a landscape orientation to increase the font or enhance the readability of the information as depicted in FIG. 5 which displays the information of FIG. 3 in a landscape orientation. The difference between the information displayed in the landscape orientation versus the portrait orientation may be application dependent or based upon a user selection such that changing the orientation of the information displayed may result in reformatting or additional information based upon a user's preference. A change of the format of information may or may not be necessary when the orientation of the information presented is changed.

The physical orientation of a display and the orientation of the information presented on the display may be associated such that the orientation of the information presented on the display may be dependent upon the physical orientation of the display. For example, if a user is holding a mobile terminal in a portrait orientation as shown in FIG. 3, the orientation of the information presented 120 on the display 110 may also be in a portrait orientation. If the user rotates or moves the mobile terminal such that the physical orientation of the display is determined to be a landscape orientation as shown in FIG. 4, the orientation of the information 220 presented may be changed to a landscape orientation with the top of the information presented at the top of the display 210. Such a change in the orientation of the information presented may be accomplished automatically, without intervention from a user, as the mobile terminal may determine the change in physical orientation of the display to be a request to change the orientation of the information presented on the display. Such automatic updating of the orientation of the information presented on the display in response to a change of the physical orientation of the display may allow a user to seamlessly transition between a landscape display and a portrait display based upon their preferred viewing of information presented on the display. The automatic updating may be performed, for example, by a processor 70 interpreting the physical movement of the display and causing the orientation of the information presented to be changed in response to the physical movement.

However, the automatic change of the orientation of information presented on the display in response to a change in the physical orientation of the display may not be desirable in certain circumstances. While it may be possible to eliminate or entirely turn-off the functionality which enables a change in orientation of the information presented on the display in response to a change of the physical orientation of the display, a user may wish to only partially or selectively disable such functionality and/or only disable such functionality under particular circumstances of use.

Presented herein are example embodiments in which the orientation of information presented on a display may be maintained despite the physical orientation of the display warranting a change in the orientation of the information presented on the display.

The change in orientation of the information presented on a display of a mobile terminal may be dependent on a number of factors including: the application presenting the information, the ability of the information to be presented in a different orientation, the physical orientation of the display, and the use state of the mobile terminal. The application presenting the information may be configured to display the information in only a single format, such as a video player that presents videos only in a landscape format. In such an embodiment, the orientation of the information presented on the display, such as display 90, may be fixed in the landscape orientation, regardless of whether the physical orientation of the display is changed to a portrait orientation. However, should the physical orientation of the display be transitioned from a first landscape orientation to a second landscape orientation as detected by sensor 84, in which the edge of the display which was previously directed up has been re-oriented to be directed down, the orientation of the information presented may be changed to display the top of the information presented at the edge of the display now arranged to be facing up.

In another embodiment, information that may be presented in a first orientation (e.g., on display 90) may not be configured to be presented in another orientation. In such an embodiment, the information presented on a display may be configured to be viewed only in a first orientation such that the orientation of the information presented is not changed, regardless of the physical orientation of the display.

In further embodiments, the orientation of information presented on a display may be dependent upon the physical orientation of the display. In such embodiments, when the physical orientation of the display is a portrait orientation, as depicted in FIG. 3 with a narrow edge of the display 110 facing up, the orientation of the information presented 120 on the display may be a portrait orientation, with the top of the information presented at the edge of the display that is facing up. In such an example, the physical orientation of the display and the orientation of the information presented are aligned (e.g., the physical display orientation is a portrait orientation and the orientation of the information presented is a portrait orientation). If the physical orientation of the display is changed to a landscape orientation (e.g., as detected through sensor 84) as illustrated in FIG. 5, the orientation of the information presented on the display may change to present the information in a landscape orientation, with the top of the information presented 320 being displayed along the long edge of the display 330 facing up. The transition of the orientation of the information presented between a portrait orientation and a landscape orientation, as performed by processor 70, for example, may be prompted by a detection of a change in the physical orientation of the display. When the information is originally presented, the physical orientation of the display may be considered such that the orientation of the information presented is determined by the physical orientation of the display. Upon detection of a change of the physical orientation of the display, the orientation of the information presented may be changed to be aligned with the physical orientation of the display (e.g., both in landscape or in portrait, with the top of the information at the upper edge of the display).

As mobile terminals may be capable of performing multiple functions and operating in multiple use states simultaneously, conflicts may exist between the active use state and a function that is configured to present information on the display. Use states of a mobile terminal may include states of use of the mobile terminal such as a voice call, a video call, a video viewer, a music player, a game, a short message service (SMS) text, a text editor, an email application, a web browser, etc. While some of these use states may benefit from the orientation of information presented on the display changing automatically in response to a change in the physical orientation of the display, other use states may be hindered by such an automatic change. As such, it may be desirable for some use states to preclude the change of the orientation of information presented on the display in response to a change in the physical orientation of the display.

In an example embodiment of the present invention, a mobile terminal, such as mobile terminal 10, may be in a use state of a voice call. The general use state of a voice call may include several different and more specific use states which are differentiated by the operational state of the mobile terminal during the voice call. For example in a first use state, a voice call may include a user holding the mobile terminal to their ear in an effort to hear through a built-in speaker (such as speaker 24 of mobile terminal 10) and to speak through the microphone (e.g., microphone 26). A second use state may include a voice call that includes a user using a speaker of the mobile terminal configured for broadcasting the voice of a caller such that the mobile terminal does not need to be held to an ear in order to hear the call. A third use state may include a voice call that is heard by a user through a wired or wireless earpiece, such as a Bluetooth® headset.

In another example embodiment of the present invention, a mobile terminal may be in a use state of a car-mode in which the mobile terminal is adapted to present information to a user that is operating a vehicle. The car-mode use state may be entered by a user selecting a car-mode option on the mobile terminal (e.g., through user interface 72), or optionally, by the mobile terminal detecting a docking station in which it has been inserted, such as a windshield mounted cradle or other such mounting device. Detection of the docking station may be achieved through a sensor, such as sensor 31, detecting the docking station, or through an interface in which the docking station connects to the mobile terminal via a wired or wireless connection, which may be used for power, communication, or the like. In a car-mode use state, the mobile terminal may be configured to present a map to a user for navigation information and the mobile terminal may be optimized for hands-free operation, such as by reading aloud text messages and emails received by the mobile terminal while in the car-mode use state. In such a car-mode use state, the physical orientation of the display may be fixed relative to the vehicle such that the physical display orientation should not change while in the car-mode use state. However, motion of a vehicle in which a mobile terminal is operating may translate to motion and acceleration of the mobile terminal itself. Such motion and acceleration may be interpreted by sensors (such as sensor 31 of mobile terminal 10) as a change in the physical orientation of the display. Consequently, the orientation of the information presented on the display may be changed, by processor 70, for example, in response to the interpreted change in physical orientation of the display, despite the physical display orientation not actually changing relative to the user.

Example embodiments of the present invention may preclude a change in the orientation of information presented on a display despite a change (actual or perceived) in physical orientation of the display which otherwise warrants a change in the orientation of information presented on the display, as detected by sensor 31, for example. A change in the physical orientation of a display (either actual or perceived by the mobile terminal) which warrants a change in the orientation of information presented on the display may be a change in physical orientation that meets a threshold requirement as detected, for example through sensor 31 and interpreted at processor 20. The threshold requirement may be determined by the type of detection used to determine the physical orientation of the display. For example, a mobile terminal (e.g., mobile terminal 10) which uses an accelerometer (e.g., sensor 31) to detect the physical orientation of the display may determine (e.g., via processor 20) that a change of the physical orientation of the display may only warrant a change in the orientation of information presented on the display if the acceleration detected along a particular axis exceeds a threshold value. A mobile terminal which uses a magnetic field to determine the physical orientation of the display may be configured such that a change of the physical orientation of the display may only warrant a change in the orientation of information presented on the display if the magnetic field orientation is changed by a certain threshold degree relative to the mobile terminal. The threshold value may also include a degree of hysteresis to avoid a change of orientation of information presented on the display in response to a momentary change of the physical orientation of the display in the event of accidental physical orientation change or a quick change-of-mind by a user.

In certain use states of a mobile terminal, it may be undesirable to change the orientation of information presented on a display in response to a change of the physical orientation of the display that otherwise warrants a change of the orientation of information presented on the display. As noted above, in a car-mode use state, it may be undesirable for the orientation of the information presented on the display to change regardless of a change of the physical orientation of the device, whether the change is actual or perceived. Further, in a use state of a voice call where a user is holding the mobile terminal to their ear, it may be undesirable to change the orientation of information presented on the display in response to a change of the physical orientation of the display which otherwise warrants a change of the orientation of information presented on the display. During a voice call use state, a user of a mobile terminal may be prompted to enter information from a user-interface, such as keypad presented on a touch screen display. In such an embodiment, the user may move the mobile terminal from their ear to an orientation in which they can view the display. The movement of the mobile terminal from the user's ear to a viewable position may cause the physical orientation of the display to change sufficiently, as detected by sensor 31, to warrant a change of the orientation of information presented on the display; however, such a change of the orientation of information presented on the display may not be desirable. In such an embodiment, the mobile terminal may be configured to preclude a change in orientation of the information presented on the display in response to a change in physical orientation of the display that otherwise warrants a change in the orientation of information presented on the display. The preclusion of a change in orientation of the information presented on the display may be based upon the use state (e.g., a voice call being taken through a built-in speaker as held to the ear of a user).

As described with respect to the above example embodiments of use states, the processor (such as processor 20) may determine the use state to preclude a change of the orientation of information presented on a display in response to a change of the physical orientation of a display which otherwise warrants a change of the orientation of the information presented on the display. In other words, despite the physical orientation of the display not aligning with the orientation of information presented on the display, a change of the orientation of information presented on the display may be precluded based upon the use state of the mobile terminal. The orientation of the information presented on the display may therefore be maintained, regardless of the physical orientation of the display.

While the orientation of the information presented may be maintained when operating in various use states, regardless of the physical orientation of the display, a user may wish to change the orientation of the information presented. A user may provide an instruction to change the orientation of the information presented on the display. The orientation of the information presented on the display may change at the instruction of the user regardless of whether the use state precludes the change of the orientation of the information presented based upon the physical orientation of the display.

In example embodiments in which the use state precludes a change of the orientation of the information presented in response to a physical orientation of the display which otherwise warrants a change of the orientation of the information presented, the use state may experience a change. If the use state transitions to a use state which does not preclude a change of the orientation of the information presented in response to a physical orientation of the display which warrants a change of the orientation of the information presented, the orientation of the information presented may change to align with the physical orientation of the display.

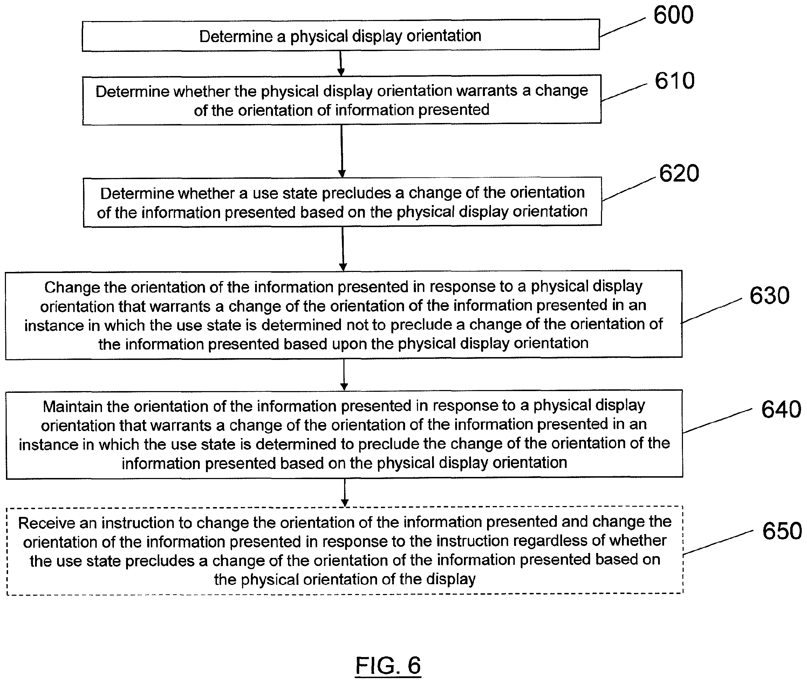

FIG. 6 is a flowchart of a method and program products according to example embodiments of the invention. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a user device and executed by a processor in the user device. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a non-transitory computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowcharts, and combinations of blocks in the flowchart, can be implemented by special purpose hardware-based computer systems which perform the specified functions, or combinations of special purpose hardware and computer instructions.

In this regard, a method according to one embodiment of the invention, as shown in FIG. 6, may include determining a physical display orientation at operation 600. At operation 610, a determination may be made as to whether the physical display orientation warrants a change of orientation of the information presented. A determination may be made at 620 as to whether a use state precludes a change of the orientation of the information presented based upon the physical display orientation. The method may also include changing the orientation of the information presented in response to a physical display orientation that warrants a change of the orientation of the information presented in an instance in which the use state is determined not to preclude a change of the orientation of the information presented based upon the physical display orientation at 630. The method may further include maintaining the orientation of the information presented in response to a physical display orientation that warrants a change of the orientation of the information presented in an instance in which the use state is determined to preclude the change of the orientation of the information presented based on the physical display orientation at 640.

In some embodiments, certain ones of the operations above may be modified or further amplified as described below. Moreover, in some embodiments additional optional operations may also be included. It should be appreciated that each of the modifications, optional additions or amplifications below may be included with the operations above either alone or in combination with any others among the features described herein. In some embodiments, the method may include receiving an instruction to change the orientation of the information presented and changing the orientation of the information presented in response to the instruction regardless of whether the use state precludes a change of the orientation of the information presented based on the physical display orientation at 650.

In an example embodiment, an apparatus for performing the method of FIG. 6 above may comprise a processor (e.g., the processor 70) configured to perform some or each of the operations (600 - 650) described above. The processor 70 may, for example, be configured to perform the operations (600- 650) by performing hardware implemented logical functions, executing stored instructions, or executing algorithms for performing each of the operations. Alternatively, the apparatus may comprise means for performing each of the operations described above. In this regard, according to an example embodiment, examples of means for performing operations 600-650 may comprise, for example, the apparatus 50 (or respective different components thereof). Additionally or alternatively, at least by virtue of the fact that the processor 70 may be configured to control or even be embodied as apparatus 50, the processor 70 and/or a device or circuitry for executing instructions or executing an algorithm for processing information as described above may also form example means for performing operations 600-650.

An example of an apparatus according to an example embodiment may include at least one processor and at least one memory including computer program code. The at least one memory and the computer program code may be configured to, with the at least one processor, cause the apparatus to perform the operations 600-650 (with or without the modifications and amplifications described above in any combination).

An example of a computer program product according to an example embodiment may include at least one computer-readable storage medium having computer-executable program code portions stored therein. The computer-executable program code portions may include program code instructions for performing operation 600-650 (with or without the modifications and amplifications described above in any combination).

In some cases, the operations (600-650) described above, along with any of the modifications may be implemented in a method that involves facilitating access to at least one interface to allow access to at least one service via at least one network. In such cases, the at least one service may be said to perform at least operations 600 to 650.

Many modifications and other embodiments of the inventions set forth herein will come to mind to one skilled in the art to which these inventions pertain having the benefit of the teachings presented in the foregoing descriptions and the associated drawings. Therefore, it is to be understood that the invention as claimed is not to be limited to the specific embodiments disclosed and that modifications and other embodiments are intended to be included within the scope of the appended claims.

## Claims

1. A method comprising:
determining a physical display orientation;
determining whether the determined physical display orientation warrants a change of orientation of information (220) presented;
determining with a processor (70), whether a use state precludes a change of the orientation of the information presented based on the determined physical display orientation;
changing the orientation of the information (220) presented in response to a determined physical display orientation that warrants a change of the orientation of the information (220) presented in an instance in which the use state is determined not to preclude a change of the orientation of the information (220) presented based on the determined physical display orientation;
maintaining the orientation of the information presented in response to a determined physical display orientation that warrants a change of the orientation of the information (220) presented in an instance in which the use state is determined to preclude the change of the orientation of the information (220) presented based on the determined physical display orientation; and
changing the orientation of the information (220) presented in response to an instruction of a user regardless of whether the use state precludes the change of the orientation of the information (220) presented based on the determined physical display orientation.

2. The method of claim 1, wherein determining whether the determined physical display orientation warrants a change of the orientation of the information (220) presented comprises determining whether the determined physical display orientation and the orientation of the information (220) presented are aligned.

3. The method of any preceding claim, further comprising:
determining a transition of the use state; and
changing the orientation of the information (220) presented in response to a determined physical display orientation that warrants a change in the orientation of the information (220) presented in an instance in which the use state is determined to have transitioned from a use state that precludes a change in the orientation of information (220) presented based upon the determined physical display orientation to a use state that does not preclude a change in the orientation of information (220) presented based upon the determined physical display orientation.

4. The method of any preceding claim, wherein determining the physical display orientation comprises receiving information from an accelerometer and determining the physical orientation based on the information from the accelerometer.

5. The method of any preceding claim, wherein the use state comprises a car-mode.

6. The method of claim 5, further comprising determining the use state based upon detection of a docking station.

7. The method of claim 5, wherein entering the car-mode use state comprises a user selecting a car-mode option via a user interface (72).

8. The method of claim 5, wherein the information presented on the display (90) comprises a map.

9. The method of any of claims 1 to 4, wherein the use state comprises a voice call view.

10. The method of any of claims 1 to 4, wherein the use state comprises a video viewer.

11. An apparatus (50) comprising at least one processor (70) and at least one memory including computer program code, the at least one memory (76) and the computer program code configured to, with the processor (70), cause the apparatus (50) to at least:
determine a physical display orientation;
determine whether the determined physical display orientation warrants a change of orientation of information (220) presented;
determine whether a use state precludes a change of the orientation of the information (220) presented based upon the determined physical display orientation;
change the orientation of the information presented in response to a determined physical display orientation that warrants a change of the orientation of the information (220) presented in an instance in which the use state is determined not to preclude a change of the orientation of the information (220) presented based on the determined physical display orientation;
maintain the orientation of the information presented in response to a determined physical display orientation that warrants a change of the orientation of the information (220) presented in an instance in which the use state is determined to preclude the change of the orientation of the information (220) presented based upon the determined physical display orientation; and
change the orientation of the information (220) presented in response to an instruction of a user regardless of whether the use state precludes the change of the orientation of the information (220) presented based on the determined physical display orientation.

12. The apparatus of claim 11, the apparatus further caused to perform a method according to any of claims 2 to 9.

13. The apparatus of claim 11 or 12, wherein the use state comprises a video viewer.

14. A computer program product comprising at least one non-transitory computer-readable storage medium having computer-executable program code instructions stored therein, the computer-executable program code instructions comprising program code instructions to:
determine a physical display orientation;
determine whether the determined physical display orientation warrants a change of orientation of information (220) presented;
determine whether a use state precludes a change of the orientation of the information (220) presented based upon the determined physical display orientation;
change the orientation of the information (220) presented in response to a determined physical display orientation that warrants a change of the orientation of the information (220) presented in an instance in which the use state is determined not to preclude a change of the orientation of the information (220) presented based on the determined physical display orientation;
maintain the orientation of the information (220) presented in response to a determined physical display orientation that warrants a change of the orientation of the information (220) presented in an instance in which the use state is determined to preclude the change of the orientation of the information (220) presented based upon the determined physical display orientation; and
changing the orientation of the information (220) presented in response to an instruction of a user regardless of whether the use state precludes the change of the orientation of the information (220) presented based on the determined physical display orientation.

15. The computer program product of claim 14, further comprising program code instructions to perform a method according to any of claims 2 to 10.

## Patentansprüche

1. Verfahren, das Folgendes umfasst:
Bestimmen einer physischen Anzeigeorientierung;
Bestimmen, ob die bestimmte physische Anzeigeorientierung eine Änderung der Orientierung von präsentierten Informationen (220) rechtfertigt;
Bestimmen mit einem Prozessor (70) auf Basis der bestimmten physischen Anzeigeorientierung, ob ein Verwendungszustand eine Änderung der Orientierung der präsentierten Informationen ausschließt;
in einem Fall, in dem auf Basis der bestimmten physischen Anzeigeorientierung bestimmt wird, dass der Verwendungszustand eine Änderung der Orientierung der präsentierten Informationen (220) nicht ausschließt, Ändern der Orientierung der präsentierten Informationen (220) in Reaktion auf eine bestimmte physische Anzeigeorientierung, die eine Änderung der Orientierung der präsentierten Informationen (220) rechtfertigt;
in einem Fall, in dem auf Basis der bestimmten physischen Anzeigeorientierung bestimmt wird, dass der Verwendungszustand die Änderung der Orientierung der präsentierten Informationen (220) ausschließt, Beibehalten der Orientierung der präsentierten Informationen in Reaktion auf eine bestimmte physische Anzeigeorientierung, die eine Änderung der Orientierung der präsentierten Informationen (220) rechtfertigt; und
unabhängig davon, ob der Verwendungszustand die Änderung der Orientierung der präsentierten Informationen (220) ausschließt, Ändern der Orientierung der präsentierten Informationen (220) in Reaktion auf eine Anweisung eines Benutzers auf Basis der bestimmten physischen Anzeigeorientierung.

2. Verfahren nach Anspruch 1, wobei das Bestimmen, ob die bestimmte physische Anzeigeorientierung eine Änderung der Orientierung der präsentierten Informationen (220) rechtfertigt, das Bestimmen, ob die bestimmte physische Anzeigeorientierung und die Orientierung der präsentierten Informationen (220) ausgerichtet sind, umfasst.

3. Verfahren nach einem der vorhergehenden Ansprüche, das ferner Folgendes umfasst:
Bestimmen eines Übergangs des Verwendungszustands; und
in einem Fall, in dem bestimmt wird, dass der Verwendungszustand von einem Verwendungszustand, der eine Änderung der Orientierung von präsentierten Informationen (220) auf Basis der bestimmten physischen Anzeigeorientierung ausschließt, zu einem Verwendungszustand übergegangen ist, der eine Änderung der Orientierung von präsentierten Informationen (220) auf Basis der bestimmten physischen Anzeigeorientierung nicht ausschließt, Ändern der Orientierung der präsentierten Informationen (220) in Reaktion auf eine bestimmte physische Anzeigeorientierung, die eine Änderung der Orientierung der präsentierten Informationen (220) rechtfertigt.

4. Verfahren nach einem der vorhergehenden Ansprüche, wobei das Bestimmen der physischen Anzeigeorientierung das Empfangen von Informationen von einem Beschleunigungsmesser und das Bestimmen der physischen Orientierung auf Basis der Informationen vom Beschleunigungsmesser umfasst.

5. Verfahren nach einem der vorhergehenden Ansprüche, wobei der Verwendungszustand einen Automodus umfasst.

6. Verfahren nach Anspruch 5, das ferner das Bestimmen des Verwendungszustands auf Basis der Detektion einer Andockstation umfasst.

7. Verfahren nach Anspruch 5, wobei das Eintreten in den Automodusverwendungszustand das Auswählen einer Automodusoption via eine Benutzerschnittstelle (72) durch einen Benutzer umfasst.

8. Verfahren nach Anspruch 5, wobei die Informationen, die auf der Anzeige (90) präsentiert werden, eine Karte umfassen.

9. Verfahren nach einem der Ansprüche 1 bis 4, wobei der Verwendungszustand eine Sprachanrufansicht umfasst.

10. Verfahren nach einem der Ansprüche 1 bis 4, wobei der Verwendungszustand einen Videobetrachter umfasst.

11. Vorrichtung (50), die mindestens einen Prozessor (70) und mindestens einen Speicher, der einen Computerprogrammcode beinhaltet, umfasst, wobei der mindestens eine Speicher (76) und der Computerprogrammcode dazu ausgelegt sind, mit dem Prozessor (70) zu bewirken, dass die Vorrichtung (50) mindestens Folgendes durchführt:
Bestimmen einer physischen Anzeigeorientierung;
Bestimmen, ob die bestimmte physische Anzeigeorientierung eine Änderung der Orientierung von präsentierten Informationen (220) rechtfertigt;
Bestimmen auf Basis der bestimmten physischen Anzeigeorientierung, ob ein Verwendungszustand eine Änderung der Orientierung der präsentierten Informationen (220) ausschließt;
in einem Fall, in dem auf Basis der bestimmten physischen Anzeigeorientierung bestimmt wird, dass der Verwendungszustand eine Änderung der Orientierung der präsentierten Informationen (220) nicht ausschließt, Ändern der Orientierung der präsentierten Informationen in Reaktion auf eine bestimmte physische Anzeigeorientierung, die eine Änderung der Orientierung der präsentierten Informationen (220) rechtfertigt;
in einem Fall, in dem auf Basis der bestimmten physischen Anzeigeorientierung bestimmt wird, dass der Verwendungszustand die Änderung der Orientierung der präsentierten Informationen (220) ausschließt, Beibehalten der Orientierung der präsentierten Informationen in Reaktion auf eine bestimmte physische Anzeigeorientierung, die eine Änderung der Orientierung der präsentierten Informationen (220) rechtfertigt; und
unabhängig davon, ob der Verwendungszustand die Änderung der Orientierung der präsentierten Informationen (220) ausschließt, Ändern der Orientierung der präsentierten Informationen (220) in Reaktion auf eine Anweisung eines Benutzers auf Basis der bestimmten physischen Anzeigeorientierung.

12. Vorrichtung nach Anspruch 11, wobei ferner bewirkt wird, dass die Vorrichtung ein Verfahren gemäß einem der Ansprüche 2 bis 9 durchführt.

13. Vorrichtung nach Anspruch 11 oder 12, wobei der Verwendungszustand einen Videobetrachter umfasst.

14. Computerprogrammprodukt, das mindestens ein nichttransitorisches computerlesbares Speichermedium umfasst, in dem computerausführbare Programmcodeanweisungen gespeichert sind, wobei die computerausführbaren Programmcodeanweisungen Programmcodeanweisungen für Folgendes umfassen:
Bestimmen einer physischen Anzeigeorientierung;
Bestimmen, ob die bestimmte physische Anzeigeorientierung eine Änderung der Orientierung von präsentierten Informationen (220) rechtfertigt;
Bestimmen auf Basis der bestimmten physischen Anzeigeorientierung, ob ein Verwendungszustand eine Änderung der Orientierung der präsentierten Informationen (220) ausschließt;
in einem Fall, in dem auf Basis der bestimmten physischen Anzeigeorientierung bestimmt wird, dass der Verwendungszustand eine Änderung der Orientierung der präsentierten Informationen (220) nicht ausschließt, Ändern der Orientierung der präsentierten Informationen (220) in Reaktion auf eine bestimmte physische Anzeigeorientierung, die eine Änderung der Orientierung der präsentierten Informationen (220) rechtfertigt;
in einem Fall, in dem auf Basis der bestimmten physischen Anzeigeorientierung bestimmt wird, dass der Verwendungszustand die Änderung der Orientierung der präsentierten Informationen (220) ausschließt, Beibehalten der Orientierung der präsentierten Informationen (220) in Reaktion auf eine bestimmte physische Anzeigeorientierung, die eine Änderung der Orientierung der präsentierten Informationen (220) rechtfertigt; und
unabhängig davon, ob der Verwendungszustand die Änderung der Orientierung der präsentierten Informationen (220) ausschließt, Ändern der Orientierung der präsentierten Informationen (220) in Reaktion auf eine Anweisung eines Benutzers auf Basis der bestimmten physischen Anzeigeorientierung.

15. Computerprogrammprodukt nach Anspruch 14, das ferner Programmcodeanweisungen zum Durchführen eines Verfahrens gemäß einem der Ansprüche 2 bis 10 umfasst.

## Revendications

1. Procédé comprenant :
la détermination d'une orientation d'affichage physique ;
la détermination de si l'orientation d'affichage physique déterminée justifie un changement d'orientation d'informations (220) présentées ;
la détermination avec un processeur (70), de si un état d'utilisation empêche un changement de l'orientation des informations présentées sur la base de l'orientation d'affichage physique déterminée ;
le changement de l'orientation des informations (220) présentées en réponse à une orientation d'affichage physique déterminée qui justifie un changement de l'orientation des informations (220) présentées dans une instance dans laquelle il est déterminé que l'état d'utilisation n'empêche pas un changement de l'orientation des informations (220) présentées sur la base de l'orientation d'affichage physique déterminée ;
le maintien de l'orientation des informations présentées en réponse à une orientation d'affichage physique déterminée qui justifie un changement de l'orientation des informations (220) présentées dans une instance dans laquelle il est déterminé que l'état d'utilisation empêche le changement de l'orientation des informations (220) présentées sur la base de l'orientation d'affichage physique déterminée ; et
le changement de l'orientation des informations (220) présentées en réponse à une instruction d'un utilisateur indépendamment de si l'état d'utilisation empêche le changement de l'orientation des informations (220) présentées sur la base de l'orientation d'affichage physique déterminée.

2. Procédé selon la revendication 1, dans lequel la détermination de si l'orientation d'affichage physique déterminée justifie un changement de l'orientation des informations (220) présentées comprend la détermination de si l'orientation d'affichage physique déterminée et l'orientation des informations (220) présentées sont alignées.

3. Procédé selon une quelconque revendication précédente, comprenant en outre :
la détermination d'une transition de l'état d'utilisation ; et
le changement de l'orientation des informations (220) présentées en réponse à une orientation d'affichage physique déterminée qui justifie un changement de l'orientation des informations (220) présentées dans une instance dans laquelle il est déterminé que l'état d'utilisation a effectué une transition d'un état d'utilisation qui empêche un changement de l'orientation d'informations (220) présentées sur la base de l'orientation d'affichage physique déterminée à un état d'utilisation qui n'empêche pas un changement de l'orientation d'informations (220) présentées sur la base de l'orientation d'affichage physique déterminée.

4. Procédé selon une quelconque revendication précédente, dans lequel la détermination de l'orientation d'affichage physique comprend la réception d'informations en provenance d'un accéléromètre et la détermination de l'orientation physique sur la base des informations en provenance de l'accéléromètre.

5. Procédé selon une quelconque revendication précédente, dans lequel l'état d'utilisation comprend un mode voiture.

6. Procédé selon la revendication 5, comprenant en outre la détermination de l'état d'utilisation sur la base de la détection d'une station d'accueil.

7. Procédé selon la revendication 5, dans lequel l'entrée dans l'état d'utilisation de mode voiture comprend un utilisateur sélectionnant une option mode voiture via une interface utilisateur (72).

8. Procédé selon la revendication 5, dans lequel les informations présentées sur l'affichage (90) comprennent une carte.

9. Procédé selon l'une quelconque des revendications 1 à 4, dans lequel l'état d'utilisation comprend une vue d'appel vocal.

10. Procédé selon l'une quelconque des revendications 1 à 4, dans lequel l'état d'utilisation comprend un visualiseur vidéo.

11. Appareil (50) comprenant au moins un processeur (70) et au moins une mémoire incluant un code de programme informatique, l'au moins une mémoire (76) et le code de programme informatique configurés pour, avec le processeur (70), amener l'appareil (50) à au moins :
déterminer une orientation d'affichage physique ;
déterminer si l'orientation d'affichage physique déterminée justifie un changement d'orientation d'informations (220) présentées ;
déterminer si un état d'utilisation empêche un changement de l'orientation des informations (220) présentées sur la base de l'orientation d'affichage physique déterminée ;
changer l'orientation des informations présentées en réponse à une orientation d'affichage physique déterminée qui justifie un changement de l'orientation des informations (220) présentées dans une instance dans laquelle il est déterminé que l'état d'utilisation n'empêche pas un changement de l'orientation des informations (220) présentées sur la base de l'orientation d'affichage physique déterminée ;
maintenir l'orientation des informations présentées en réponse à une orientation d'affichage physique déterminée qui justifie un changement de l'orientation des informations (220) présentées dans une instance dans laquelle il est déterminé que l'état d'utilisation empêche le changement de l'orientation des informations (220) présentées sur la base de l'orientation d'affichage physique déterminée ; et
changer l'orientation des informations (220) présentées en réponse à une instruction d'un utilisateur indépendamment de si l'état d'utilisation empêche le changement de l'orientation des informations (220) présentées sur la base de l'orientation d'affichage physique déterminée.

12. Appareil selon la revendication 11, l'appareil étant en outre amené à effectuer un procédé selon l'une quelconque des revendications 2 à 9.

13. Appareil selon la revendication 11 ou 12, dans lequel l'état d'utilisation comprend un visualiseur vidéo.

14. Produit de programme informatique comprenant au moins un support de stockage lisible par ordinateur non transitoire dans lequel sont stockées des instructions de code de programme exécutables par ordinateur, les instructions de code de programme exécutables par ordinateur comprenant des instructions de code de programme pour :
déterminer une orientation d'affichage physique ;
déterminer si l'orientation d'affichage physique déterminée justifie un changement d'orientation d'informations (220) présentées ;
déterminer si un état d'utilisation empêche un changement de l'orientation des informations (220) présentées sur la base de l'orientation d'affichage physique déterminée ;
changer l'orientation des informations (220) présentées en réponse à une orientation d'affichage physique déterminée qui justifie un changement de l'orientation des informations (220) présentées dans une instance dans laquelle il est déterminé que l'état d'utilisation n'empêche pas un changement de l'orientation des informations (220) présentées sur la base de l'orientation d'affichage physique déterminée ;
maintenir l'orientation des informations (220) présentées en réponse à une orientation d'affichage physique déterminée qui justifie un changement de l'orientation des informations (220) présentées dans une instance dans laquelle il est déterminé que l'état d'utilisation empêche le changement de l'orientation des informations (220) présentées sur la base de l'orientation d'affichage physique déterminée ; et
changer l'orientation des informations (220) présentées en réponse à une instruction d'un utilisateur indépendamment de si l'état d'utilisation empêche le changement de l'orientation des informations (220) présentées sur la base de l'orientation d'affichage physique déterminée.

15. Produit de programme informatique selon la revendication 14, comprenant en outre des instructions de code de programme pour effectuer un procédé selon l'une quelconque des revendications 2 à 10.
